(19) **Europäisches Patentamt / European Patent Office / Office européen des brevets**

(11) **EP 4 108 718 A1**

(12) # EUROPEAN PATENT APPLICATION
published in accordance with Art. 153(4) EPC

(43) Date of publication:
**28.12.2022 Bulletin 2022/52**

(21) Application number: **21757200.7**

(22) Date of filing: **18.02.2021**

(51) International Patent Classification (IPC):
**C08L 3/02** (2006.01)    **C08L 5/00** (2006.01)
**C07H 3/00** (2006.01)    **C07K 14/195** (2006.01)
**C08B 37/00** (2006.01)

(52) Cooperative Patent Classification (CPC):
**C07H 3/00; C07K 14/195; C08B 37/00; C08L 3/02; C08L 5/00**

(86) International application number:
**PCT/BR2021/050075**

(87) International publication number:
**WO 2021/163778 (26.08.2021 Gazette 2021/34)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **18.02.2020 BR 102020003370**

(71) Applicant: **Biopolix Materiais Tecnológicos Ltda - ME**
**14056-680 Ribeirão Preto (BR)**

(72) Inventors:
- **TONDO VENDRUSCOLO, Claire**
  **14025-710 Ribeirão Preto (BR)**
- **MIOTTO BECKER, Cristiane**
  **90610-250 Porto Alegre (BR)**
- **ZEHETMEYER, Gislene**
  **90050-102 Porto Alegre (BR)**
- **OLIVEIRA, Vinicius**
  **92310-440 Canoas (BR)**

(74) Representative: **KATZAROV S.A.**
**Geneva Business Center**
**12 Avenue des Morgines**
**1213 Petit-Lancy (CH)**

(54) **BIODEGRADABLE, THERMOPLASTIC, NANOSTRUCTURED BIORESIN COMPOSITION, BIORESIN OBTAINED AND ARTICLE**

(57)    A biodegradable, thermoplastic, nanostructured bioresin composition is described, said composition comprising a) 10-80% by weight, in relation to the total weight of the composition, of a polymer matrix from a renewable source, comprising: i) a polymer from a renewable source comprising an exopolysaccharide produced by Xanthomonas arboricola pathovar pruni (pruni xanthan), said pruni xanthan being used alone or in combination with commercial xanthans comprising an exopolysaccharide produced by Xanthomonas campestris pv. campestris, in a proportion of 2-50% by weight, in relation to the total weight of the composition; and ii) between 10% and 80% by weight, in relation to the total weight of the composition, of modified starch; b) between 10% and 70% by weight, in relation to the total weight of the composition, of a plasticizer selected from a polyhydroxy alcohol such as glycerol; and c) nanofillers, selected from organophilic clay Cloisite 30B, crystalline nanocellulose CNC, in a weight ratio in relation to the biopolymer matrix of between 0.002 and 0.10, of inorganic or organic nanofillers, or functionalized nanoparticles (FNP) ZnO NanometallisRSol and SiO2 NanometallisRsolGel in a weight ratio in relation to the biopolymer matrix of 0.0001-0.0005, such that, when extruding the composition under extrusion conditions, a MFI for producing flexible articles of 0.1 g/10 min-20 g/10 min is achieved for a load of 21.6k and, for producing semi-rigid or rigid articles, the MFI is at least 70 g/10 min for a load of 21.6k. The bioresin obtained by extrusion of the composition and the articles manufactured therefrom, whether films or rigid or semi-rigid articles, are also described.

**Description**

**FIELD OF THE INVENTION**

The present invention belongs to the field of the resins based on a renewable polymer matrix for obtaining a biodegradable, nanostructured bioresin. More specifically, the invention refers to a composition based on a renewable source polymer matrix such as Xanthan pruni, neat or in admixture with commercial xanthans, a modified starch, a plasticizer and a nanofiller in such amounts that upon being extruded under extrusion conditions into a thermoplastic, nanostructured bioresin pellets, the composition exhibits a Melt Flow Index of at least 0.1g/10 min and up to 20g/10 min when assayed under a load of 21.6 kg to obtain thermoplastic, nanostructured bioresins able to produce flexible articles when re-extruded.

On the other hand, the Melt Flow Index should be of at least 70 g/10min under a load of also 21.6 kg to obtain a resin as spaghetti/pellets able to be re-extruded into semi-rigid or rigid articles, which is achieved for a weight ratio of nanofillers to the sum of xanthan and modified starch (polymer matrix) between 0.0001% and 10%.

For further uses the bioresins can be turned into powder.

**BACKGROUND OF THE INVENTION**

Nanocomposites are multicomponent materials consisting in multiple phases, at least one of them being a continuous phase, the dimension of one of the phases being of the order of nanometers (1 to 100nm).

The application of nanoparticles as fillers in polymer matrices imparts changes in the matrix properties related to the specific chemical interaction between the fillers and the polymer, this being able to influence the molecular dynamics of the polymer, resulting in significant changes in its physical properties, namely, its thermal and/or mechanicl behavior, see Esteves, A.C.C. - Nanocompósitos de matriz polimérica: estratégias de síntese de materiais hibridos. Quím. Nova, vol.27, n°5. p.799, São Paulo Sept./Oct. 2004.

Because of environmental issues, there is a huge interest in the development of bioresins combining biodegradability and sustainability, by incorporating nanofillers into biodegradable polymers, providing a renewable-source derived material having potential applications in the medical area, the agriculture and the packaging sector, among others.

In accordance with the ASTM Method D 6400-99, biodegradable polymers are those where the main degradation mechanism is the action of microrganisms such as bacteria, fungi and algae. Biodegradation is a natural process through which organic compounds of the environment are converted into simpler compounds, mineralized and redistributed through elementary cycles such as that of carbon, nitrogen and sulfur. See Chandra, R. and Rustgi, R. (1998) Biodegradable Polymers. Progress in Polymer Science, 23, 1273-1335.

According to the production method, biodegradable polymers can be didactically divided into four categories: a) Polymers produced by natural or genetically modified microrganisms such as bacterial biopolymers (for example, xanthan, dextran and wellan gums) or polyhydroxyalcanoates (PHA, PHB); b) Polymers directly extracted from natural materials, chiefly plants (for example, starch, cellulose, Arabic gum, guar and carrageenan; proteins such as casein and gluten); c) Polymers based on bioderived monomers (for example, polylactate, PLA) produced through classical chemical synthesis; and d) Polymers chemically modified by the semi-synthesis of already existing polymers (for example, chitin-chitosan, cellulose-carboxymethylcellu lose).

The state-of-the-art teaches biodegradable polymer matrix nanocomposites that utilize compositions with natural polymers described above in the present specification. The natural polymers such as PHA, PHB and PLA are already thermoplastics. However biopolymers such as xanthan, cellulose, carboxymethylcelluylose, starch and chitin-chitosan even being high molecular mass molecules require the association of additives to render the same thermoplastic and improve the mechanical properties to make them relevant raw materials for building biomaterials able to be processed by extrusion, more specifically, one-shot extrusion in the absence of added water.

The published International application WO2011080623A1 teaches a formulation where most of its contents are biodegradable, it being employed for preparing thin melted films, and including a plasticized natural polymer such as a thermoplastic starch, thermoplastic vegetable protein, or microbial polyester-polyhydroxyalcanoate (PHA), a biodegradable polymer such as a copolyester (such as Ecoflex), a polyolefin (for example, polyethylene) and a compatibilizer agent having a polar portion and a nonpolar portion in the same polymer.

The European patent document EP2794214 (US 2013154151A1) relates to a method for forming a thermoplastic composition containing a combination of a renewable biopolymer, a polyolefin and a compatibilizer agent, the combination being directed to the feeding section of an extruder, the compatibilizer agent having a polar component and a nonpolar component. A liquid plasticizer is directly injected into the extruder to mix the plasticizer and the biopolymer, polyolefin and compatibilizer agent to form a mixture. The mixture is processed by melting inside the extruder to form the thermoplastic composition. A film can also be obtained by processing the composition. Contrary to the present invention, the composition described in the above documents includes at least one non-renewable component, the polyolefin that impairs its biodegradability condition. Besides, the composition does not contain any kind of nanofiller.

Stil referring to the differences between the two Technologies, that which the object of the European patent document EP2794214 and the present invention, this latter is the first where a composition up to 100% biodegradable, containing powdery, highly water-soluble components under heating or not are submitted to extrusion without any water addition and without any pre-preparation, that is, dispensing with the solubilization, encapsulation and extrusion steps, so that then its pellets can be extruded together with polyolefins.

The US patent document US 6,406,530 relates to a biopolymer base for producing biodegradable articles including: a) 100 parts by weight of one or more biodegradable polymer materials able to be processed under thermoplastic conditions, selected among the group consisting of polysaccharides and proteins, preferably at least one chemically modified starch of any native type, fermenting, recombinant and/or prepared by biotransformation and/or derived from the above-mentioned starches; b) from 10 to 100 parts by weight of water; c) from 1 to 100 parts by weight of lignin; d) if desired, up to 50 parts by weight of at least one plasticizer; and e) if desired, up to 200 parts by weight, preferably not more than 100 parts by weight of other conventional additives, where the components are thermoplastified by introducing thermal and mechanical energy into the mixture, preferably at a high temperature while shear is exerted on the mixture.

The above cited US patent document US 6,406,530 relates to a composition based on starch and lignin which includes water (component b) of the composition) besides a plasticizer. For the processing, high temperatures and shear are needed. On the contrary, the present composition includes a biodegradable polymer, is water-free and does not require any shear since the densities of the biopolymers are very similar. The present composition does not make use of high temperatures since even by using nanofillers the melting point remains low (lower than 140°C).

Among the bacterial polymers xanthan gum, an exopolysaccharide synthesized by bacteria of the *Xanthomonas* gender, highlights as one of the most important polysaccharides of bacterial origin produced in industrial scale, see Swings; E.L. Civerolo (eds.), Xanthomonas. London, Chapman & Hall, p. 363-388, 1993. This exopolysaccharide has the ability to form viscous solutions at low concentrations (0.05-1.0%), stability at wide pH and temperature ranges, high pseudoplasticity and a certain thixotropy. It is soluble in hot or cold water, besides having biocompatibility and compatibility with polysaccharides, proteins, lipids and salts.

Also classed as bacterial polymers, the Polyhydroxyalcanoates (PHAs) have generated scientific, technological and industrial interest because of their thermoplastic features and, chiefly, the biodegradability and possibilities of synthesis from renewable raw materials; and Poly-3-hydroxybutyrate (PHB), a homopolymer made up of 4 carbon atoms monomer units, possessing molar mass, melting temperature, crystallinity and tensle strength very similar to that of polypropylene, with the advantage of not being toxic, resistant to ultraviolet light, impart better gas, fat and odor barrier, besides being completely biodegradable.

The PHAs have a highly regular polymer chain and high molar mass, making it useful for several industrial applications. The main physical properties are the high molar mass and high melting temperature, crystallinity and strength similar to that of polypropylene, which makes it possible the replacement of this one by biodegradables in the building of atoxic, environmentally suitable thermoplastics. The interest in these biopolymers is due to the search for the ideal replacements for conventional petroleum-derived plastics in applications of disposable products, since they demand lower degradation time, contributing for environmental improvement.

Examples of biodegradable polymer compositions that associate bacterial polymers and natural polymers are addressed in the Chinese patent document CN109486140, that teaches a method for obtaining a biodegradable film from a composition that comprises, by mass: 80-120 parts of PHA biodegradable plastics, 1-8 parts of chitosan, 8-15 parts of starch, 0.02-0.08 parts of a photo-sensitizer, 0.01 -0.04 parts of tributyl acetyl citrate, 0.5 -1.8 parts of acetic acid, 1-5 parts of propylene copolymer, 2-8 parts of silicon oil, 3-8 parts of furfural, 4-10 parts of fructose, 40-60 parts of distilled water, 1-3 parts of plasticizer, 0.5-1.5 parts of anti-foaming agent and 0.5-1.9 parts of a compatibilizer agent.

The CN108948691 document describes a process for the preparation of a PHA biodegradable membrane based on a lignin-modified starch which includes the steps of: (1) vacuum-drying the starch and lignin-based polyhydroxyalcanoate (PHA) respectively; (2) adding the starch and lignin-based dried polyhydroxyalcanoate (PHA) particles, a chain extender, an antioxidant, a plasticizer, a lubricant and a thermal stabilizer into a high speed mixer, and uniformly mixing; (3) in a twin-screw extruder, granulating by extrusion the obtained mixed material; and (4) obtaining a film by blowing the composite plastic particles at a certain temperature for preparing the membrane material.

The CN107417984 document describes a biodegradable plastic composition comprising 30-45% modified starch, 3.5-8% cellulose, 1-5¨% of a photosensitizer, 2-10% of a PHA polymer, 5-10% of polyethylene (PE) synthetic resin, 0.5-3% of a solubilizer and 2-5¨% of a coupling agent.

The Canadian patent CA2342174C relates to biodegradable, heterophase compositions comprising partially or completely destructured and/or complexed starch, a polysaccharide ester and a plasticizer for the polysaccharide ester. In these compositions, the polysaccharide ester constitutes the matrix and the starch is the disperse phase as particles or dominions of average number dimension lower than 1 $\mu$m and preferably lower than 0.5 $\mu$m for at least 80% of the particles. The compositions comprise equally an additive able to increase and keep at values of 4 or higher the pH of a solution obtained by contacting the pellet compositions with water at ambient temperature for 1 hour, the pellet:water ratio being 1:10 by weight.

The Chinese patent document CN10948614 relates to a process for obtaining a biodegradable film where the bacterial biopolymer is PHA - polyester poly-hydroxyalcanoate. PHA and xanthan are bacterial biopolymers obtained by fermentation, but are completely different. Xanthan is an extracellular biopolymer while PHA is an intracellular biopolymer. The PHA extraction process requires toxic solvents, while xanthan, being extracellular, only needs to be insolubilized in ethyl alcohol, which is nontoxic. A further non-bacterial biodegradable natural biopolymer is chitosan. The composition presented in this document differs from all the other constituents of the present composition, exception made to starch and plasticizer. A further differential of the process which is the object of the Chinese patent publication CN109486140 is the use of 40-60 parts of distilled water in the composition while the composition of the present Application is free from added water.

The Chinese patent document CN108948691 relates to a PHA biodegradable membrane based on modified starch and lignin, a chain extensor, an antioxidant, a plasticizer, a lubricant and a heat stabilizer agent for obtaining film by extrusion. The composition presented in the Chinese patent document CN108948691, in spite of containing starch, a plasticizer, a lubricant and a stabilizer differs from the bioresin of the invention as regards other fundamental constituents, chiefly as regards the polymer matrix (lignin vs xanthan pruni), besides not making use of nanofillers. The purpose of the present Application is to obtain a nanostructured bioresin as pellets, but it can be rendered into biodegradable films as will be demonstrated throughout the present specification.

The Chinese patent document CN107417984 describes a biodegradable plastic composition comprising modified starch, cellulose, a photosensitizing agent, PHA biopolymer, PE (a fossil source synthetic resin), a solubilizing agent and a binding agent. The composition presented in the CN107417984 document differs from the present Application in all constituents, exception made to starch and plasticizer. The polymers utilized are PHA and modified starch, biodegradable biopolymers and PE, a synthetic, non biodegradable resin.

The Chinese patent document CN109401248 describes a nontoxic material for drinking straws, and belongs to the technical field of the high-molecular weight polymer materials. The object of the invention is prepared from the raw materials: powdery hydoxyapathite, calcium phosphate, polylactic acid, polycyclohexyl carbonate, polyhydroxyalcanoate, cane bagasse fibers or from other vegetable materials, glycerin, bean starch, polyethylene glycol, polyvinyl pyrrolydone, xanthann gum, glucomannan konjac, a stabilizer, a modifier, sodium alginate and ethylene polyoxide (EPO). Depending on the degradable material for drinking straw of the invention through modification by admixture and surface treatment the drinking straw presents certain thermal resistance and ageing resistance features.

The Brazilian published Application BR102014028009A1, of the Applicant, describes a biodegradable plastic composition of a topic anesthetic bioadhesive used as a pre-anesthetic, with controlled release of the active principle. In spite of the fact that the present Application and the Brazilian published Application BR102014028009A1 are both directed to compositions leading to biodegradable materials, both being based on a polymer matrix such as xanthan pruni, the object of both differs deeply in the sense that the present invention aims at a bioresin as pellets to be transformed into articles or biodegradable films. In the composition of the present invention, the main aspect is the nanofiller to polymer matrix + starch ratio, which should be such as to secure a Melt Flow Index of at least 0.1g/10min and up to 20g/10 min with 21.6 kg at extrusion for obtaining nanostructured resins which upon being re-extruded lead to flexible articles, and of at least 70 g/10min with 21.6 kg at extrusion of the composition for obtaining a bioresin apt to be re-extruded into semi-rigid or rigid articles.

A further fundamental aspect is that the composition of the Brazilian published Application BR102014028009A1 comprises a relevant and necessary humid portion for obtaining a bioadhesive. On the contrary, the composition of the present invention is completely free from water addition. Thus, the teachings of the Brazilian published Application do not suggest nor describe the development leading to the present Application, which is directed to a composition and thermoplastic bioresin that constitutes a nanocomposite.

The US patent document US 6,811,599A describes a thermoplastic, biodegradable material including a natural polymer, a plasticizer and an inorganic filler such as clay.

In spite of the state-of-the-art reports of biodegradable polymer compositions, what is seen is that nanofillers are used just as filling materials to secure the mechanical resistance properties, the polymer composition obtention process including pre-mixing and water addition steps, which should be mandatorily withdrawn in a later step of the productive process.

In nanocomposites of renewable sources polymer matrix the polymers constitute an excellent nanoparticles support, protecting them from physical/chemical degradation and easing their handling/processing. The nanometric dimensions fillers (1-100 nm) have high surface area, promoting better dispersion of the polymer matrix and thus improved composite physical properties linked to the material homogeneity. Further, the preparation of polymer matrix nanocomposites allow, in many cases, to reach a balance between low cost, resulting from the lower amount of filler, and high performance level, resulting from the synergy between the components.

The documents of the patent literature demonstrate that the state-of-the-art does not describe nor suggest any technology for producing biodegradable, extrudable thermoplastic materials based on biopolymer matrix, starch and nanofillers compositions, as pellets or films, that follow the criteria for the value of Melt Flow Index as expressed in the present Application, that is, at least 0.1g/10min and up to 20g/10 min at 21.6 kg at extrusion for obtaining nanostructured bioresins that upon being re-extruded lead to flexible articles, and of at least 70 g/10 min at 21.6 kg at extrusion of the composition for obtaining the bioresin to be re-extruded into semi-rigid or rigid articles. The prescribed Melt flow index values are obtained: i) in case nanofillers are used, when the weight ratio of said nanofiller to the sum of the xanthan matrix and modified starch is between 0.0020 and 0.10 and ii) in case functionalized nanoparticles are used, the weight ratio of said functionalized particles being between 0.0001 and 0.005 to the sum of xanthan matrix and modified starch. Said in another way, the proportion of functionalized nanoparticles is between 100 ppm and 500 ppm of particles to the polymer matrix (neat xanthan pruni and starch or mixtures of xanthan pruni with commercial xanthans and starch). Thus the proportions of nanofiller (or functionalized nanoparticle) to the weight ratio of the sum of xanthan matrix and modified starch determine the required Melt Flow Index for obtaining the desired thermoplastic products (or films).

## SUMMARY OF THE INVENTION

Broadly, the composition for the biodegradable, thermoplastic, nanostructured bioresin of the invention comprises:

a) A renewable source polymer matrix, consisting of i) between 10% and 80% by weight, preferably between 20% and 75% by weight, and more preferably between 30% and 70% by weight, based on the total weight of the composition, of a renewable source polymer comprising an exopolysaccharide produced by *Xanthomonas arboricola* pathovar *pruni* (xanthan pruni), and of ii) between 10% and 80% by weight, preferably between 20% and 75% by weight, and more preferably, between 25% and 65% by weight, based on the total weight of the composition, of modified starch;

b) Between 10% and 70% by weight, preferably between 15% and 65% by weight, and more preferably, between 20% and 60% by weight, based on the total weight of the composition, of a plasticizer selected among a polyhydroxylated alcohol such as glycerol; and

c) Nanofillers, the weight ratio of nanofillers based on the said polymer matrix being from 0.0020 to 0.10, preferably between 0.0020 to 0.080 and more preferably between 0.0020 to 0.070 for inorganic or organic nanofillers and of 0.0001 to 0.0005 by weight based on said polymer matrix, of functionalized nanoparticles.

To obtain the thermoplastic resin as pellets, the nanofillers weight ratio to the polymer matrix should be comprised between 0.0020 and 0.10 of inorganic or organic nanofillers or still between 0.0001 and 0.0005 of functionalized particles. For the functionalized particles, this represents between 100 and 500 ppm by kg of biopolymer matrix so as to obtain by extrusion of the composition under conditions of extrusion MFI (Melt Flow Index) of at least 0.1g/10 min and up to 20 g/10min for a 21.6kg load. The obtained pellets can be re-extruded into articles that may be relatively flexible packages or biodegradable films or retransformed into powder for other uses. The MFI (Melt Flow Index) of at least 70g/10 min for a 21.6 kg load for the extrusion of the composition leads to pellets that upon being re-extruded provide articles that can be relatively rigid or semi-flexible packages or retransformed into powder for other uses.

The biopolymer matrix can further include a mixture of xanthans, such as a mixture of xanthan pruni and commercial xanthans.

In a very innovative way, not yet described nor suggested in the state-of-the-art technique for obtaining resin pellets, in the invention the ingredients designed for the extrusion processing under process conditions do not include water. Considering that the xanthan or the xanthans utilized, the modified starch and the other components of the mixture to be processed constitute powders, it would not be expected that the process conditions for obtaining resin pellets without water addition could be met.

The ingredients mixing process for obtaining the resin or nanocomposite occurs by shear in the extruder, under process conditions and, also in an innovative way, in one single step (one-shot). The bioresin is obtained as pellets and is between 95% and 100% biodegradable. The pellets are of smooth and uniform aspect, being comparable to the pellets obtained from usual thermoplastic polymers.

The bioresin of the invention is thermoplastic, shaped as threads/spaghettis or powders obtained by grinding the threads or spaghettis. The threads or powders can be associated with other biodegradable materials to be processed for other uses.

The bioresin pellets are submitted to blowing extrusion molding processes for manufacturing biodegradable films.

Alternatively the pellets are submitted to thermoforming for manufacturing molded articles for different applications.

The advancement in the state-of-the-art is given by the use of extracellular bacterial biopolymers such as xanthan pruni that, due to its high molar mass and its chemical composition enables it to be associated with natural biopolymers such as starches and other additives for forming the biodegradable bioresin.

A relevant advancement in the state-of-the-art technique is also imparted by the use of organic (nanocellulose) or inorganic (cloisites mineral) nanofillers, or still functionalized nanoparticles to ease processing, improve the Melt Flow Index and mechanical properties, increase thermal resistance and improve barrier properties of the bioresin biomaterial.

A further advancement of the state-of-the-art is observed or confirmed by obtaining these bioresins in one single processing by directly adding all the components into the extruder in a process that dispenses with pre-preparation and is free from water.

In addition, one of the hugest advancements is that the biopolymer matrix biodegradable nanocomposites of the invention, herein called bioresin, is a platform allowing to add many additives making it possible to obtain bioresins of different properties to reach the desired final use. Thus, these bioresins are processable and useful in admixtures of biodegradable stuff for other uses besides biodegradable plastics.

Still a further advancement in the state-of-the-art technique results from the bacterial biopolymer itself, such as xanthan pruni, endowed with a unique constitution and that allows additionally to making chemical modifications making it possible new combinations. And these can be made during the preparation process or in the post-processing to obtain the thermal properties for the desired final end.

One feature of the invention is that the plastic obtained by the use of these bioresins will be completely biodegradable. The tests corroborating the biodegradability of the end product are shown in the respirometry biodegradation test in accordance with the DIN EM 13432:2000, ISSO 14855-1:2012 and ABNT NBR 15448-2:2008 standards. See also Figure 13.

## BRIEF DESCRIPTION OF THE DRAWINGS

Figure 1A up to Figure 1G are images of samples of a combination of 50% by weight of xanthan pruni and 50% by weight of glycerol and the same amount by weight of a mixture of xanthans (xanthan pruni/commercial xanthan) and glycerol during the assessment of the Melt Flow Index by extrusion after certain time intervals between cuts for each sample.

Figure 2 exhibits images of samples of a combination of (25% by weight of xanthan pruni and 25% by weight of starch) and 50% by weight of glycerol during the assessment of the Melt Flow Index after certain time intervals between cuts for each sample. Figure 2 shows the images of samples during the determination of the Melt Flow Index after certain time intervals between cust for each sample A and B. Figure 2A, xanthan pruni and bean starch (extracted from carioca bean in the lab). Figure 2B xanthan pruni and (commercial) waxy corn starch. Samples of Figure 2A and Figure 2B are: (25%xanthan + 25% starch) and glycerol 50%. Figure 2A is xanthan pruni + bean starch. Figure 2B is xanthan pruni and (commercial) waxy corn starch.

Figure 3A depicts images of samples of a combination of 33% by weight of xanthan pruni and 33% by weight of (commercial) waxy corn starch and 34% by weight glycerol. Figure 3B depicts images of samples of a combination of 37,5% by weight of xanthan pruni, 12.5% by weight of (commercial) waxy corn starch and 50% Glycerol by weight .Images were obtained during the assessment of the Melt Flow Index after certain time intervals between cuts for each sample. The xanthan strain utilized in the combinations of the samples of Figure 3 is the same as that of the combinations of the samples of Figure 2. In the sequence it has been considered that from the choice of the basic formulation (neat xanthan pruni or mixture of xanthan, plus modified corn starch plus glycerol) will be designed by sample 12. The compositions of xanthan pruni plus modified corn starch plus glycerol plus nanofiller will be called 12.1, 12.2, 12.3 and 12.4 in accordance with the nanofillers employed.

Figure 4 shows the image of Sample 12.1 during the nanostructured bioresin extrusion process and manufacturing of same of spaghetti shape. The spaghetti is of smooth and uniform aspect, and can be compared to the ideal spaghettis' aspect.

Figure 5A is the image of starch biopellets obtained in the same way as the bioresin 12 or 12.1 samples (using the same processing operating conditions). The formulation of these biopellets comprises 50% glycerol and 50% starch, in accordance with the parameters suitable for the bioresin extrusion in a twin-screw extruder, in a single, water-free processing, while Figure 5B presents bioresin biopellets of sample 12.1 obtained by an extrusion process leading to nanostructured biopellets. The biopellets are of smooth and uniform aspect, and can be compared to the pellets of usual thermoplastic polymers obtained from non-renewable sources.

Figure 6A refers to the image of Sample 12.1 in the bioresin extrusion process and the manufacturing of same as a film - Figure 6B. Manufacturing of the balloon film by blowing. The biofilms are prepared in this way for the biodegradability assay.

Figure 7 shows the image of the samples of the biofilms prepared for the biodegradability assay. Figure 7A is the starch biofilm and Figure 7B is the biofilm of the bioresin Sample 12.1.

Figure 8 is the graphical representation of pH results monitored during the biodegradability assay of the starch biofilms and of the biofilms of bioresin Sample 12.1, obtained from the starch resins biopellets and the Sample 12.1 resins biopellets. The reference material is cellulose grade TLC. The Reference Sample is starch films. For the biodegradability assays it is recommended to use cellulose grade TLC (reference material); a further reference material was the corn starch biofilm Amisol 3408 (commercial) manufactured in the same way and using the same extrusion parameters as those employed in the manufacture of the nanostructured bioresin biofilms of the invention. Figure 9 is the graphical representation of the humidity results monitored during the biodegrability assay of the starch biofilms and of the Sample 12.1 bioresin biofilsm, obtained from the starch resins biopellets and the biopellets of the Sample 12.1 resins biopellets.

Figure 10 exchibits results for the biodegradability percentage during the assay period of the starch biofilms and the Sample 12.1 bioresin biofilms, obtained by using the biopellets of the starch resins and the biopellets of the Sample 12.1 resins.

Figure 11 is a schematic representation of the twin-screw extruder used for obtaining the nanostructured bioresin as biopellets. To batcher 1 is added the mixture of the dry components (powder) and the liquid(s) are added by means of a dispenser pump at zone 2.

Figure 12 exhibits results for the tearing tests of the Sample 12.1 bioresin films samples after determination of the tensile physical properties (a) film direction in the Machine Direction (MD) orientation and (b) film direction in the Cross-Machine Direction (CMD) orientation.

Figure 13 shows results for the tearing test. Test specimens of the Bioska+ sample (from Finland) after determination of the tensile physical properties (a) film direction in the Machine Direction (MD) orientation and (b) film direction in the Cross-Machine Direction (CMD) orientation. The assessments were performed to compare Sample 12.1 with the commercial brand Finlandia Bioska +.

Figure 14 shows results for the biodegradability test by respirometry during the test period of the starch bioresin biopellets and of the Sample 12.3 bioresin.

Figure 15 is a plot showing the sample 12.3 mineralization and the positive reference throughout time.

Figure 16 shows the linear adjustment of the biopolymer sample 12.3 used for predicting the polymer degradation. The linear adjustment was used to predict this sample biodegradation, this sample being the only one that did not degrade after 180 days.

Figures 17, 18, 19 and 20 show the evolution of the bioresin 12.1 biofilms during 70 days, as compared with two reference samples. These Figures are examples that it is visually possible to observe the samples disappearance within the substrate by the biodegradation action throughout the incubation period.

Figure 17 shows the visual follow-up of the degradation evolution of the reference Sample of the Starch biofilm (starch 1) and cellulose (starch 2) in the interior of the incubation reactors at the beginning of the test and after 10, 15, 20 and 30 days.

Figure 18 shows the visual follow-up of the degradation evolution of the reference Sample of the Starch biofilm (starch 1) and cellulose (starch 2) in the interior of the incubation reactors at the beginning of the test and after 40, 45, 50, and 60 days.

Figure 19 shows the visual follow-up of the degradation evolution of the Samples 12.1 and 12.2 in the interior of the incubation reactors at the beginning of the test and after 10, 15, 20 and 30 days.

Figure 20 shows the visual follow-up of the degradation evolution of the Samples 12.1 and 12.2 in the interior of the incubation reactors at the beginning of the test and after 40, 45, 50 e 60 days of biodegradability test.

## DETAILED DESCRIPTION OF THE INVENTION

According to the invention, the following expressions have the following meaning:
"Xanthan pruni" is the xanthan gum, an exopolysaccharide produced by the *arboricola* pathovar *pruni.* Xanthan pruni (or xanthan gum pruni) useful for the purposes of the invention has been the object of Applications by the same Assignee, Brazilian PI0406309-0 and Brazlian BR122014030015.

"Commercial Xanthan" is xanthan gum, an exopolysaccharide produced by *Xanthomonas campestris* pathovar *campestris.*

The polymer matrix or biopolymer matrix are interchangeable expressions, the matrix being constituted either by neat xanthan pruni or combined with commercial xanthans, as defined above in the present specification, and modified starch.

The Reference Sample of Figures 8, 9 and 10 is the starch film. A starch film is a film prepared from 50% amisol starch (commercial) and 50% glycerol without any other additive, using the same extrusion parameters as those used in the extrusion of biopellets.

Cellulose is the standard reference sample.

Functionalized nanoparticles or FNPs are a commercial product, comprised of chemical structures of pre-set molecular arrangement, operating by molecular interaction. The working involves attacking the oxygen of molecules such as xanthan, bridging or breaking the structure rings. There are two kinds of FNPs: ZnO NanometallisRSol and $SiO_2$ Nanometallis RsolGel.

Single step (one-shot) processing means that for the extrusion of dry materials (powder) such as biopolymers and dry additives all of them are directly added to the extruder in the weight proportions set forth in the composition and that also the liquid materials set forth in the composition such as plasticizers are directly added into the extruded by means of a dosing pump.

The low temperature used for the extrusion is meant as a temperature lower than 140°C.

In the present specification, the so-called dry or water-free extrusion means that no pre-preparation of biopolymers solubilization is effected as recommended in the literature. Water is not added to any combination of the composition.

The composition for biodegradable, thermoplastic nanostructured bioresin, object of the present invention, comprises:

a) A renewable source polymer matrix, consisting of i) between 10% and 80% by weight, preferably between 20% and 75% by weight, and more preferably between 30% and 70% by weight, based on the total weight of the composition, of a renewable source polymer comprising na exopolysaccharide produced by *Xanthomonas arboricola* pathovar *pruni* (xanthan pruni), and of ii) between 10% and 80% by weight, preferably between 20% and 75% by weight, and more preferably, between 25% and 65% by weight, based on the total weight of the composition, of modified starch;

b) Between 10% and 70% by weight, preferably between 15% and 65% by weight, and more preferably, between 20% and 60% by weight, based on the total weight of the composition, of a plasticizer selected among a polyhydroxylated alcool such as glycerol; and

c) Nanofillers, selected among organophilic clay Cloisite 30B, crystalline nanocellulose NCC, the weight ratio of nanofillers based on the said polymer matrix being from 0.0020 to 0.10, preferably between 0.0020 to 0.080 and more preferably between 0.0020 to 0.070 for inorganic or organic nanofillers and of 0.0001 to 0.0005 by weight based on said polymer matrix, of functionalized nanoparticles (FNP) ZnO NanometallisRSol and $SiO_2$ Nanometallis RsolGel so that In the extrusion of the composition under extrusion conditions the MF (Melt Flow Index) for obtaining flexible articles is from 0.1g/10 min to 20 g/10 min for a 21.6kg load and for obtaining semi-rigid or rigid articles the MFI is at least 70 g/10 min for a 21.6kg load.

Thus, in one mode of the invention, the polymer matrix of the composition of the invention comprises neat xanthan pruni and starch, plasticizer and nanofiller.

In another mode, the the polymer matrix of the composition of the invention comprises a combination of xanthan pruni and commercial xanthan, and starch, besides plasticizer and nanofiller.

The pellets obtained with these compositions and with these flow properties can be re-extuded into articles such as biodegradable films for packages or rigid or relatively rigid articles.

The object of the present invention is a polymer composition which is a nanocomposite obtained from renewable sources materials. More specifically, the invention relates to a composition for obtaining a bioresin that can be thermally processed by extrusion, the composition comprising (a) a biodegradable polymer matrix including at least one bacterial polymer and at least a natural, renewable source biopolymer selected among modified starch; (b) a plasticizer, neat or a mixture of plasticizers; and (c) an organic, inorganic or functionalized nanofiller, and where the proportion of nanofiller to the sum of the bacterial polymer matrix and natural biopolymer as starch is between 0.2% and 10% of inorganic or organic nanofillers so that the Melt Flow Index of the obtained bioresin is of at least 0.1f/10min to 20 g/10 min for a 21.6kg load or still between 100 ppm to 500 ppm for each kg of biopolymer matrix, of functionalized nanoparticles, so that the Melt Flow Index of the produced bioresin is of at least 70 g/10 min for a 21.6kg load.

The nanocomposites of the invention can also be processed in admixture with other, non-plastic biodegradable materials.

According to the invention, the bacterial biopolymer is selected among neat xanthan pruni or in admixture with commercial xanthans, of molar mass between $5 \times 10^5$ to $1.3x\ 10^7$ g.mol$^{-1}$ having melting and degradation temperatures similar to that of xanthan pruni or commercial xanthans that can be modified during the process for preparing xanthan or by post-processing to ease the association of other additives.

According to the invention, bacterial biopolymers are associated with modified starches in chemical, physical or enzymatic ways. Starches also are high molar mass molecules, of the order of g/molx $10^6$.

Starch is selected among rice starch, of amylase content between 20% to 30% and/or 70 % to 78% of amylopectin; bean starch, of amylose content between 15% to 20% and/or 20% to 27% of amylopectin; corn starch, of amylase content between 25% to 28% and/or 72% to 75% of amylopectin; cassava starch, of amylose content between 14% to 22% and/or 77% to 89% of amylopectin. The selected starches can be modified in chemical, physical or enzymatic ways.

The plasticizer agent comprises a renewable source plasticizer, neat or a mixture of renewable sources plasticizers, selected among i) the lipophilic agents, selected among edible oils and liquid lipids, rice vegetable oils, soy, sunflower, canola, peanuts and corn, coconut, nuts, almonds and edible nuts, copaiba, caranauba oil, linseed, grape seed; and ii) hydrophilic agents selected among propylene glycol and polyethylene glycol, glycerin, glycerol, sorbitol, neat or combined, and present in an amount between 5% and 60% by weight of the bioresin.

Alternatively, the plasticizer agent comprises a major portion of renewable source plasticizer or a mixture of renewable source with up to 5% non-renewable surce plasticizer, selected among: Bis(2-ethylhexyl)phthalate (DEHP), Bis(2-ethylhexyl)adipate (DOA), epoxidized vegetable oils, phosphates, silicon oil (polydimethylsiloxane), Polybutadiene (PB), alkyl citrates, Ethers/tioethers.

The nanofiller is of renewable source when it comprises an organic nanofiller selected among crystalline nanocellulose, or inorganic when it comprises a mineral nanofiller selected among: Cloisite 30B, Cloisite 20A, Cloisite Na, Cloisite 93, kaolin and/or mineral nanofillers ($SiO_2$ or ZnO nanofunctionalized particles). The amount of nanofiller is from 0.0001% by weight, preferably from 0.0001% up to 8% by weight, and still more preferably between 0.0001% up to 7% by weight, based on the total weight of the composition.

In one mode, provided the nanoparticles are in solid form (powder) the same are combined to the biopolymers (powder) directly in the extruder, without pre-preparation.

In another mode, the particles being a liquid or a solution, the seame are admixed to the plasticizer directly in the extruder without pre-preparation, such as by means of a dosing pump.

In another mode the solid nanoparticles (powder) are mixed to the biopolymers (powder) by pre-processing in a mixer at the shear rate of 300 rpm for 10 min at a temperature between 35°C to 38°C to be later combined in the extruder where the liquids will be also added in the same processing.

In another mode, the liquid nanoparticles or nanoparticles in solution or gel are mixed to the plasticizers and further liquid additives by pre-processing by agitation at a shear rate of 100 to 200 rpm for 10 min at a temperature between 25°C to 35°C to be later added to extruder, either directly or by a dosing pump for the mixture, at the same moment where the biopolymers are added to the extruder.

In another mode, between 0.0% and 10% by weight of the bioresin composition of solid dispersants or anti-agglomerants selected among mono-, di- or triphosphates, titanium dioxide, calcium or magnesium carbonate and silicon dioxide are used.

In another mode between 0.1% by weight and 10% by weight of a renewable source nanofiller selected among crystalline nanocellulose, coconut fiber nanocellulose, sugar cane bagasse nanocellulose, rice hull, as such or a mixture of nanofillers in any amount is used, based on the weight of the biopolymer matrix.

In another mode between 0.1% by weight and 15% by weight of compatibilizers, SEBS (non-reactive compatibilizing agents, copolymers or blocks of polymers called S polymers and blocks of B polymers), or other ones, selected among the commercial EL05, FS105, FS110; FS115 compounds, neat or combined in any amount, based on the weight of the biopolymer matrix.

In still another mode, it is used from 0.0% by weight to 10% by weight of thermal stabilizers selected among Calcium Chloride, $CaCl_2$ and Zinc Chloride, $ZnCl_2$, neat or combined in any amount, based on the weight of the biopolymer matrix.

In another mode from 0.0% by weight to 5.0% by weight of dimensional stabilizers, selected among those of calcium base and zinc base, neat or combined in any amount are used, based on the weight of the biopolymer matrix.

In another mode from 0.0% by weight to 10.0% by weight of antioxidants, selected among sulfites (thioesters and esters of the thiodipropionic acid) and phosphites (phosphoric acid triesters), ascorbic acid, erythorbic acid and their salts, neat or combined in any amount, or still double action ones, antioxidants and conservatives selected among primary and chelating, synergists such as butyl-hydroxytoluene (BHT) and butylhydroxyanisole (BHA) are used, based on the weight of the biopolymer matrix.

In another mode, from 0.0% by weight to 5.0% by weight of conservatives, selected among methyl and ethyl paraben, sorbic acid and sodium or potassium sorbate, neat or combined in any amount are used, based on the weight of the biopolymer matrix.

In another mode, from 0.0% by weight to 5.0% by weight, based on the weight of the biopolymer matrix, of emulsifiers selected among compounds of hydrophilic-lipophilic balance (HLB) between 0.0 and 5.0, preferably between 0.2 and 3.0, and more preferably between 0.5 and 1.5, selected among sorbitan trioleate (Span 85) and sorbitan tristearate (Span 65) are used, neat or combined in any amount.

In another mode from 0.0% by weight to 5.0% by weight, based on the weight of the composition, of emulgents, selected among polyoxyethylene esters (commercial products Tween 60 and Tween 80) and lecithin are used.

In another mode from 0.0% by weight to 5.0% by weight, based on the weight of the composition of antioxidants, selected among primary and chelating, synergists such as butyl hydroxytoluene (BHT) and butyl hydroxyanisole (BHA), ascorbic acid and erythorbic acid and their salts, respectively, combined or not are used.

In another mode from 0.0% by weight to 10.0% by weight based on the total weight of the composition of salts, mono- and divalent, selected among Sodium Chloride, NaCl, Potassium Chloride, KCl, $MnO_2$, $Mn_2O$, neat or combined in any amount.

In another mode from 0.0% by weight to 10.0% by weight based on the weight of the biopolymer matrix of a low-molecular weight $C_1$-$C_3$ alcohol selected among ethyl alcohol is used.

In another mode from 0.0% by weight to 10.0% by weight based on the weight of the biopolymer matrix of an anti-humectant selected among silicon dioxide $SiO_2$, calcium carbonate $CaCO_3$, talco $(Mg_3(Si2O_5)_2(OH)_2$ or $(3MgO. 4SiO_2. H2O)$, magnesium carbonate $MgCO_3$, calcium silicate $CaSiO_3$, aluminum salts: aluminum silicate, sodium aluminum silicate: $NaAl_2Si_3O_8$, tricalcium phosphate, magnesium oxide, potassium oxide, sodium oxide, ammonium salts of the myristic, palmitic and stearic acids; microcrystalline cellulose.

For producing the resin biopellets, the powder components combined in the required proportions for processing are duly dried in a forced air circulation oven at 60°C, and are then directed to a twin-screw extruder with feeding rate varying from 500 to 700 g/h. The liquid plasticizers are added during the process. After the processing the bioresin pellets are recovered in accordance with the invention.

In general terms, the composition of the invention, processed into a biodegradable, thermoplastic bioresin, occurs in a twin-screw extruder. In this extruder, into Batcher 1 are added the powdery components (polymer matrix, starch, nanofiller(s) and additives) while the plasticizers mixture is added via the twin-screw extruder Zone 2 Dosing Pump. See Figure 11. According to the invention, at first the experiments aimed at demonstrating that only the components combination of the invention composition, in the indicated proportions, leads to a biodegradable thermoplastic resin in form of pellets or a film by blowing extrusion. Thus, at first 50%/50% by weight combinations of xanthan pruni with glycerol or (xanthan pruni/commercial xanthan 25%/25%) and glycerol 50% by weight were prepared. As it could be foreseen, no resin having fair extrusion conditions could be prepared as assessed by the Melt Flow Index. However, these experiments show that it is possible to extrude xanthan-based compositions, either neat xanthan pruni or combined with commercial xanthans.

Thus, mixtures of xanthans and plasticizer were obtained, in varied proportions, without nanofiller and without starch and the Melf Flow Index (MFI) was assessed, this being the extrudability parameter for a mixture of components of a self-sustainable resin.

The products obtained can be used as biopellets or retransformed into powder for other uses. The obtained bioresins do not exhibit resistance to allow re-extrusion for forming films.

The invention will be described below by reference to the attached Figures, which should not be construed as limiting of the invention, many variations in the present composition being possible, the same being completely comprised within the scope of the invention.

Figure 1 shows images of the samples during the Melt Flow Index assessment after certain time intervals between cuts for each sample. Figure 1A: Sample A, xanthan pruni 50% by weight+ 50% Glycerol by weight ; Figure 1B: Sample B, (xanthan pruni 25% by weight /commercial xanthan 25% by weight) + 50% Glycerol by weight ; Figure 1C: Sample C, xanthan pruni 50% by weight + 50% Glycerol by weight , Figure 1D: Sample D, (xanthan pruni 25% by weight /commercial xanthan 25% by weight) + 50% Glycerol by weight , Figure 1E: Sample E, xanthan pruni 50% by weight + 50% Glycerol by weight, Figure 1F: Sample F(xanthan pruni 25% by weight / commercial xanthan 25% by weight) + 50% Glycerol by weight and Figure 1G: Sample G, xanthan pruni 50% by weight + 50% Glycerol by weight.

In Figure 1, for the sake of illustration, the obtained extrudates showed roughness and high swelling (ratio between the die opening and the extrudate diameter), this imparting undesired aspect to a bioresin.

In Figure 2, for the sake of illustration, it is possible to observe the smooth bioresin that configures a desired aspect for a bioresin.

The Melt Flow Index of the Samples illustrated in Figure 1 is presented in Table 1. Sample H of Table 1 did not flow (without Melt Flow Index) this is why it is not represented in Figure 1.

The xanthans pruni were produced in the laboratory in accordance with the teachings of Brazilian patent PI04065309-0B1, of the same main author of the present Application, and herein completely incorporated as reference.

Table 1 below lists the results for the Melt Flow Index for the samples of Figure 1. In all cases the load used in the extrusion was 21.6 kg.

**TABLE 1**

| Sample | FORMULA TION | MELT FLOW INDEX (g/ 10 min) |
|---|---|---|
| A | xanthan pruni 50% by weight+50% Glycerol by weight | 0,02 |
| B | (xanthan pruni 25% by weight: commercial xanthan 25% by weight) +50% Glycerol by weight | 0,08 |
| C | xanthan pruni 50% by weight + 50% Glycerol by weight | 0,44 |

(continued)

| Sample | FORMULA TION | MELT FLOW INDEX (g/ 10 min) |
|---|---|---|
| D | (xanthan pruni 25% by weight:xanthan comercial 25% by weight) + 50% Glycerol by weight | 2,34 |
| E | xanthan pruni 50% by weight + 50% Glycerol by weight | 2,72 |
| F | xanthan pruni 25%by weight+ 25% by weight commercial xanthan +50% Glycerol | 16,26 |
| G | xanthan pruni 50% by weight + 50% Glycerol by weight | 1,15 |
| H | xanthan pruni 50% by weight+ 50% Glycerol by weight | S/F |

The A, C, E, G and H Samples of Table 1 above were processed with xanthans of different strains of *Xanthomonas arborícola* pv pruni or different processing conditions, which resulted in different values for the Melt Flow Index. The changes in Melt Flow Index reveal that the choice of the xanthan strain as well as the processing conditions are determining for obtaining the Melt Flow Index values.

Sample H was obtained from a xanthan pruni strain that did not allow the assessment of the Melt Flow Index.

The results listed in Table 1 above for the mixtures of xanthan pruni neat or in admixture with other xanthans, added of 50% plasticizer had Melt Flow Index very low, between 0.02 (g/10 min) to 16.26 (g/10 min) for a 21.6kg load, which rendered impossible the extrusion for forming bioresin having resistance for re-extrusion.

Aiming at improving the samples flow, different starches were added. According to the results for Melt Flow Index of the compositions, the proportions of xanthan, starch and glycerol were established, see Table 2. No nanofiller were added to these compositions.

Figure 2 exhibits samples images during the assessment of the Melt Flow Index after certain time intervals between cust for each sample. Figure 2A and 2B. Figure 2A refers to a biopolymers mixture with 25% by weight of xanthan pruni +25% by weight of starch from carioca beans (Starch A), in the lab, combined with 50% by weight glycerol. Figure 2B refers to a biopolymers mixture with 25% by weight of xanthan pruni +25% by weight of commercial waxy corn starch (commercial) (Starch B) combined with 50% by weight glycerol. These samples were labeled as Sample 12 and refer to the samples obtained from a certain xanthan pruni strain which is suitable for extrusion.

The Melt Flow Index of the samples represented in Figure 2 is listed in Table 2. The values for the Melt Flow Index were obtained from a composition containing xanthan pruni, Sample 12, that was also employed in the experiments of Figure 3.

**TABLE 2**

| SAMPLE FIG. 2 | FORMULA TION | MELT FLOW INDEX (g/ 10 MIN) | LOAD (KG) |
|---|---|---|---|
| A | 50% by weight (Xanthan pruni + starch (A)) + glycerol 50% by weight | 8.64 | 21.6 |
| B | 50% by weight (xanthan pruni + starch (B)) + glycerol 50% by weight | 57.23 | 15.0 |

Data from Table 2 demonstrate the importance of starch addition for obtaining suitable Melt Flow Index values for extruding a bioresin, as well as the influence of the various kinds of starch.

As can be seen from the data of Table 2 above, the Melt Flow Index value was strongly influenced by the kind of starch, for the carioca bean starch (Starch A) the Melt Flow Index being 8.64 g/10 min for a 21.6 kg load, and for the waxy corn starch (Starch B) (modified) it was 57.23 g/10 min for a 15.0 kg load. For the sake of illustration, Figure 2A and 2B illustrates the bioresin obtained from bean starch and corn starch.

Figure 3 illustrates the images of samples during the assessment of the Melt Flow Index after certain time intervals between cuts for each sample: Figure 3A is Sample 12 made up of 33% by weight of xanthan pruni and 33% by weight of waxy corn starch (commercial) and 34% by weight glycerol. Figure 3B is Sample 12 mde up of 37.5% by weight of xanthan pruni and 12.5% by weight of waxy corn starch (commercial) and 50% by weight glicerol. The Melt Flow Index of these samples is listed in Table 3. The load is 21.6 kg.

**TABLE 3**

| SAMPLE FIG. 3 | FORMULATION | MELT FLOW INDEX (g/10 MIN) |
|---|---|---|
| 3A | 33 %by weight (xanthan pruni Sample 12) + 33%corn starch + 34% by weight glycerol | 0.35 |
| 3B | 37.5% xanthan pruni XP +12.5% starch + 50% by weight glycerol | 26.62 |

In accordance with Figure 3A and 3B, samples containing a lower proportion of glycerol exhibit higher extrudate size, which evidences their higher fluidity. It was also observed that the extrudates had a high degree of roughness and swelling, even in the presence of starch in the composition.

The so-called Sample 12 (2A and 2B) of Table 2 had low fluidity, even for the compositions with glycerol and starch. The results obtained for the compositions of Sample 12 samples (2A and 2B) it could be observed that Starch B influences more favorably the fluidity as compared with Starch A.

In the Example of Table 3 for Sample 12 herein designed Figures 3A and 3B, (xanthan pruni) and corn starch were used, the amount of glycerol plasticizer being varied. The Melt Flow Index was strongly influenced by the amount of glycerol. Figure 3 illustrates the aspect of the bioresin obtained with the different glycerol concentrations.

Tables 1, 2 and 3 above in the present specification relate to exploratory experiments to demonstrate that it is possible to extrude xanthan, both of the xanthan pruni species as of mixtures of xanthan pruni with commercial species. Still, the Tables demonstrate that it is also possible to extrude neat xanthan pruni or xanthan pruni in admixture with commercial xanthan, starch and glycerol, to obtain extrudable products, but that it is not possible to obtain, by extrusion, based on these exploratory compositions, pellets that can be re-extruded into articles or transformed into package films by blow extrusion. Such products - articles and films - are only possible to obtain from the composition of the invention, described above in the present specification.

The bioresin of the invention is obtained as a spaghetti (continuous filament), cut into pellets (granules) or ground as powder. This bioresin or nanostructured resin was developed to be used as a raw material for the plastics transformation industries, flexible plastic packaging industry (balloon extrusion), semiflexible (injection machine) or rigid according to the added additives.

In one mode, a typical composition for preparing the bioresin is as in Table 4 below. In this mode the polymer matrix is made up of xanthan pruni only and modified starch, without the addition of any commercial xanthan.

This Table relates to a typical sample, named Sample I, related to a bioresin processed based on a composition according to the invention.

**TABLE 4**

| Xanthan pruni (by weight) | Other xanthans | Modified starch (by weight) | Plasticizers | Nanofillers (by weight) |
|---|---|---|---|---|
| 10% to 80% | ---- | 10% a 80% | 10% to 70% | 0.0001% to 10% |
| 20% to 75% | ---- | 20% a 75% | 15% to 65% | 0.0001% to 8% |
| 30% to 70% | ---- | 25% a 65% | 20% to 60% | 0.0001% to 7% |

On the other hand Sample II typical composition, where the polymer matrix xanthan component comprises a mixture of xanthans is listed in Table 5 below.

**TABLE 5**

| Xanthan pruni (by weight) | Other xanthans (by weight) | Modified starch (by weight) | Plasticizers (by weight) | Nanofillers (by weight) |
|---|---|---|---|---|
| 10% to 80% | 2% to 50% | 10% to 80% | 10% to 70% | 0.0001% to 10% |
| 20% to 75% | 5% to 35% | 20% to 75% | 15% to 65% | 0.0001% to 8% |
| 30% to 70% | 5% to 30% | 25% to 65% | 20% to 60% | 0.0001% to 7% |

The chief parameters for preparing the biodegradable resin are the use of renewable sources biopolymers such as xanthans and starches and plasticizers also from renewable sources and 100% biodegradable.

A determining parameter in preparing the bioresin is the kind of nanofiller, which influences the Melt Flow Index. The studies, since the individual assessment of the Melt Flow Index of each of the constituents, of the best biopolymers (xanthans and starches) association and ideal plasticizer enabled to produce the 1, 2, 3, 4 and 5 Tables detailed above in the present specification, for which the extrusion operating conditions were determined for obtaining a dry bioresin, that is, an extruded bioresin having a humidity content in accordance with the contents accepted for similar products.

The obtention of the nanostructured, thermoplastic and biodegradable bioresins resulted from the addition, in the amounts cited above in the present specification, of different nanofillers to the biopolymer matrix, followed by extrusion.

Humidity is an important extrusion parameter. Thus, the humidity of a reference thermoplastic resin sample is between 12% and 15%. On the other hand, the samples listed in Tables 2 to 5 had a humidity percentual varying from 11% to14%, which indicates the conformity of the bioresin of the invention with the recommended humidity values for these products.

The MFI data for the Sample 12 compositions with glycerol and starch indicated fluidity closer to that of the resins usually used for obtaining films by blow extrusion (balloon). Further, a more accentuated rise in fluidity was observed for compositions prepared with starch B (commercial corn starch) relative to those prepared with starch A (carioca beans starch).

The compositions of the invention reach MFI values suitable for extrusion for certain proportions of nanofillers based on the polymer matrix (xanthan pruni neat or combined with commercial xanthans and starch). Such proportions were se forth above in the present specification and comprise weight ratio of nanofiller for the sum of xanthan matrix and modified starch (or polymer matrix) between 0.0020 and 0.10 and comprise weight ratio of the functionalized nanoparticles for the sum of the xanthan and modified starch matrix between 0.0001 and 0.0005.

Useful for the purposes of the invention are the commercial inorganic (mineral) nanofillers Cloisite 30B, organic nanofillers, crystalline nanocellulose, commercial nanocellulose marketed by CelluDorce NCV 100 and functionalized NPsF nanoparticles marketed by Nanometallis. Two types of these, viz., 1 - ZnO functionalized nanoparticles (ZnO 80% and 20% water solution) and 2- $SiO_2$ functionalized nanoparticles (SolGel 7% $SiO_2$ and 93% water, presented as gel).

Still, in view of the crucial importance of the Melt Flow Index parameter for the thermoplastic resins extrusion, the influence of several nanofillers on this parameter was investigated, that is, on the thermoplasticity of the bioresin. To this end samples with different nanofillers were prepared and a reference sample, Sample 12, free from nanofiller. The results are listed in Table 6 below.

The Melt Flow Index of Samples 12, 12.1, 12.2, 12.3 and 12.4 with the different nanofillers in Sample 12 (xanthan pruni, modified starch, plasticizer) now designated 12, 12.1, 12.2, 12.3 and 12.4 according to the added nanofiller enabled the Melt Flow Index to increase to make it possible to obtain different nanostructured, thermoplastic and biodegradable bioresins.

The values for Melt Flow Index are listed in Table 6 below.

**TABLE 6**

| Sample | Nanofillers type | Melt Flow Index (g/10min) |
|---|---|---|
| Sample 12 | No nanofiller | 12.8 |
| Sample 12.1 | Nanofiller - organophilic Clay Cloisite 30B | 77.26 |
| Sample 12.2 | Crystalline Nanocellulose (CNC) | 65.18 |
| Sample 12.3 | Functionalized Nanoparticle - ZnO NanoMetallisR Sol | 84.17 |
| Sample 12.4 | Functionalized Nanoparticle $SiO_2$ NanoMetallis R SolGel | 156.08 |

The Melt Flow Index (MFI) of the samples was obtained with the aid of a plastometer Melt Flow - Modular Line model CEAST (Instron, USA), at a temperature of 120°C. The Melt Flow Index (MFI) was assayed with a load of 5 kg, 15 kg and 21.6 kg in accordance with the ASTM D1238-13 Method. The sample mass was collected and stored at each time interval (accoding to the flow behavior of each sample, at 30 seconds, 01 or 05 minutes interval), for later weighing and register.

Melt Flow Index (MFI)

The Melt Flow Index (MFI) of Sample 12, free from nanofiller, was 12.8g/10 min, and can be compared with a conventional thermoplastic for extrusion of films obtained by blow extrusion or tubular film extruder or balloon extruder.

Mineral nanofillers such as organophilic clay for example Cloisite 30B and the natural nanofillers such as Crystalline Nanocellulose (CNC) are used in ratio by weight between 0.0020 and 0.10 or 0.2% to 10% of the total weight of the composition. As for the functionalized nanoparticles, these are employed at the weight ratio between 0.0001 to 0.0005 or 100ppm to 500ppm by kg of polymer matrix. This points out to functionalized nanoparticles amounts between 500 to 1,000 times lower than the other nanofillers lead to better resuls on the Melt Flow Index, this largely widening the use of these nanostructured bioresins, as can be seen from the results of Table 6 above.

Relative humidity is a relevant parameter for thermoplastics extrusion and was assessed for a series of samples of the invention. Thus, the Relative Humidity (RH) of the samples listes in Table 7 was determined with the aid of a humidity measurement equipment Sartorium Mark 3, at a temperature of 100°C, initial delay of 9s, waiting temperature of 50°C, a 2.0g sample being employed. The results for the relative humidity of the samples are listed in Table 7 below.

**TABLE 7**

| SAMPLE | RELATIVE HUMIDITY (%U) |
|---|---|
| Reference | 12.46 |
| 01 | 11.57 |
| 12 | 14.26 |
| 02 | 11.57 |
| 03 | 12.15 |
| 06 | 13.55 |
| 07 | 14.34 |
| 09 | 14.55 |
| 10 | 14.37 |
| A | 14.57 |
| B | 13.48 |

The Reference Sample is commercial corn starch, brand Amisol 3408, Sample B is waxy corn starch (commercial, Sample A is bean starch, variety carioca (laboratory extracted by the Applicant).

All Samples represent combinations of powdery ingredients (xanthans and starches and some inorganic nanofillers for example Cloisite 30B, Cloisite Na and organic nanofillers for example crystalline nanocellulose) and liquid ingredients such as plasticizers and some nanofunctionalized particles for example ZnO for preparing the bioresin in accordance with the invention.

Data for the characterization of xanthans and starches had humidity relatively close to that of the Reference Sample, which was 12.46%U, the percentage for xanthans and starches varying from 11%U to 14%U. Within this range all samples are in form of powders, both xanthans and starches and the Reference Sample. This is the intrinsic or inherent product humidity.

The manufacture of pellets from the compositions of the invention comprised a one-shot extruding process in a twin-screw extruder, without pre-preparation of the raw materials, the process being free from water addition and at low temperature.

The parametrization of the bioresin pelletizing process in a twin-screw extruder was developed based on a series of tests.

For these tests Samples 1 and 12 were selected. The production of the bioresin biopellets involved a twin-screw extruder with screw rate 90-100 rpm; torque 20 nM to 35 nM; pressure: 35 to 45 bar; feed rate: 0.5 to 1.0 kg/h; temperature profile varying from 80 to 160°C, with the temperature profiles shown in Table 8 employed for processing of Sample 1 and Sample 12.

The temperature profile required for producing bioresins from Samples 1 and 12 is listed in Table 8 below. The same profile was used for Samples 12.1, 12.2, 12.3 and 12.4.

TABLE 8

| Profile Identification | Temperature Profile (°C) | | | | | |
|---|---|---|---|---|---|---|
| | Zone1 | Zone 2 | Zone 3 | Zone 4 | Zone 5 | Zone 6 |
| 115°C/120°C | 115 | 115 | 115 | 120 | 120 | 120 |
| 80°C/125°C | 80 | 100 | 110 | 115 | 120 | 125 |
| 110°C/120°C | 110 | 110 | 115 | 115 | 120 | 120 |

The samples were prepared in a one-shot mode. The components were weighed and physically admixed, being added to the automatic batcher for transfer to the extruder feeder. Glycerol was automatically dosed with the aid of a dosing pump. The extrusion was performed at a feeding rate of 700g/h and in this way 250g-batches were weighed for each raw material.

The biopolymers were previously dried in a forced air circulation oven at 60°C overnight, being withdrawn from the oven just at the time of the extrusion. Biopolymers of humidity between 10%U and 17%U are considered dry and do not require drying being directly forwarded to extrusion.

The extrusion led to biopellets which should be submitted to biodegradability tests.

The biodegradability was determined with the bioresin biopellets and with the bioplastics (films) obtained with the bioresin.

The biodegradation test performed on the bioplastics obtained from the biopellets of the bioresin Sample 12.1 and 12.2 for 70 days in accordance with international standards to determine the period required for attaining degradation level corroborated that the thermoplastic, nanostructured bioresin of the invention is 100% biodegradable. See Figures 8, 9 and 10 and Figures 17,18,19 and 20.

Figure 8 is a plot of the pH variation vs. days for various samples among which one is the invention sample. In the plot of Figure 8, "compost' is an organic composting product sample; another sample is cellulose grade TLC (reference material); the reference sample is a film of amisol starch obtained in accordance with parameters informed for the bioresin extrusion in a twin-screw extruder in a one-shot processing and in the absence of water, and a biofilm of Sample 12.1 according to Table 4, the biofilms being prepared from biopellets. Consequent to degradation, pH is stabilized for all samples. Therefore, the pH evolution through time of Sample 12.1 of the invention is comparable to that of totally biodegradable products such as starch and cellulose.

Figure 9 is the graphical representation of the results for humidity monitored during the biodegradability test for the starch biofilms and for the Sample 12.1 bioresin biofilms, obtained from the biopellets of the starch resins and the biopellets of the Sample 12.1 resins. The experiments were conducted for 70 days. The various Samples to be tested are the same as those of Figure 8. Therefore, the evolution of humidity with time for Sample 12.1 of the invention is comparable to that of totally biodegradable products such as starch and cellulose. The products assayed were the same as those of Figure 8.

Figure 10 exhibits results for the biodegradability percentage during the test period of the starch biofilms and the Sample 12.1 bioresin biofilms, obtained from the biopellets of the starch resins and the biopellets of the Sample 12.1 resins. The reference sample is the corn starch amisol (commercial) biofilm prepared with 50% starch and 50% glycerol without any other additive, using the same extrusion parameters as those for obtaining biopellets, in accordance with parameters informed for the bioresin extrusion in a twin-screw extruder in a one-shot processing and in the absence of water.

Still as concerns Figures 8 and 9, these exhibit the values for pH and humidity monitored during the biodegradability test of the reference sample starch and Sample 12.1, totalling to 67 days test. Throughout the biodegradability test period, the pH of Sample 12.1 was stable and the humidity was controlled, being close to 90%. The temperature of the biodegradability chamber was kept at $60°C\pm2°C$ during the whole test period, in accordance with the standard requirements, besides, the humidity and pH were controlled, performing follow-up analyses every 7 days, all the results being duly recorded.

The plot relating percentual of biodegradability of the samples and of the reference material (cellulose) during the test period of 0 to 70 days (effected from February 5, 2019 through April 12, 2019) was constructed on the basis of the results obtained for carbon dioxide ($CO_2$) released at each incubation reactor as can be seen in Figure 10.

Soon after the first 10 days test a strong odor in the incubation flasks could be observed, this indicating the onset of the samples degradation. Through 15 days, the samples degradation could be observed, forming a more gelatinous film and it was no longer possible to identify the shape of the initial samples (films of 2cmx2cm diameter). After 30 days it was already possible to observe that the samples size had reduced and had a brittle aspect (small pieces of sample). After 45 days it was nearly no longer possible to observe the samples in the incubation reactors, however, the test was prolonged until the samples attained at least 90% of the organic carbon converted into carbon dioxide, which is demonstrated by the speed and biodegradation level expressed by the theoretical carbon dioxide conversion ratio.

The test results show that the assessed sample (Sample 12.1) exhibited biodegradability after 67 days incubation in a biodegradability chamber simulating an intense aerobic composting process in a lab, under controlled conditions.

Under the test conditions, the reference material (amisol starch bioplastic) and standard reference (cellulose TLC) exhibited 100% biodegradability after the 48 days period. Sample 12.1 had approximately 66% biodegradability during this same period, and the starch sample exhibited 62% biodegradability for this same period. In accordance with the DIN EN 12432:2000 standard the biodegradability percentage of the sample should be of at least 90%, as it is for the reference material, so this material can be considered a biodegradable material. See Figure 10.

Balloon film test in blown film extrusion

To test the processing condition for Sample 12.1 and 12.4 the same working conditions applied above in the present specification were used, only the extruder die was changed for obtaining the balloon film by blow extrusion.

To test the processing condition for the starch Sample or Reference Sample, the same working conditions applied above in the present specification were used, only the extruder die was changed for obtaining the balloon film by blown extrusion.

Transformation tests of the bioresins pellets into films were carried out to obtain suitable material for the biodegradation test in accordance with the DIN EN 13432:2000, ISO 14855-1:2012 and ABNT NBR 15448-2:2008 standards.

The characterization tests carried out on the obtained biofilms are described below.

The pellets to be characterized were obtained according to the procedures described hereinbefore, and are illustrated in Figure 5.

Extruded biofilms were also produced from the biopellets for further biodegradation analysis of the material.

Both Samples, Reference Sample (Amisol Starch) and Sample 12.1 when extruded as a balloon film, exhibited similar absorptions related to aliphatic hydrocarbons C-H (carbon-hydrogen) linkages, and O-H (hydroxyl) linkage, and C=O linkage (carbonyl) in lesser amount. The absorptions of the two Samples correspond to the absorptions exhibited by polysaccharides.

Thermogravimetric Analysis

The Samples "Sample 12.1 Balloon Film" and "Reference Sample" showed three main mass loss stages: the first one related to the loss of bound and adsorbed water molecules, the second one related to the degradation of the polymer chain under an inert atmosphere and the third one also related to the polymer chain under an oxidizing atmosphere.

For "Sample 12.1 Balloon Film" the polymer chain degradation in an inert atmosphere starts at 164°C with a mass loss of 69%. The mass loss in an oxidizing atmosphere represents 13% while the residue represents 3%.

For the "Reference Sample" the polymer chain degradation under an inert atmosphere starts at 200°C with a mass loss of 82%. The mass loss in an oxidizing atmosphere represents 8% and did not have any residue. The residual mass originates from the non-degraded fraction under synthetic air atmosphere (oxidizing), it being originated from the polymer chain or from inorganic components added in the formulation, for example, silicon and metallic oxides.

The percentual values for the 1st, 2nd and 3rd mass losses seen in the thermogravimetric analysis are listed in Table 9 below.

**TABLE 9**

| Sample | % of 1st mass loss | % of 2nd mass loss | % of 3rd mass loss | % Residues | Sum |
|---|---|---|---|---|---|
| Sample 12.1 Balloon Film | 15.1 | 69.4 | 12.6 | 2.8 | 99.9 |
| Reference Sample (Starch) | 10.3 | 82.0 | 7.5 | 0.2 | 100 |

The "Sample 12.1 Balloon Film" did not total 100% in the sum of the mass losses because of the accentuated mass loss at the onset of the analysis. On the basis of the vaues of Table 9 it is possible to state that the Samples exhibit similar thermal stability, with the "Reference Sample" having degradation temperature just 26°C above the temperature of the "Sample 12.1 Balloon Film".

Table 12 below lists the values of maximum temperatures attained in the 1st loss, the 2nd loss and the 3rd loss, in °C.

**TABLE 10**

| Sample | $T_{max}$. in the 1st loss (°C) | $T_{max}$. in the 2nd loss (°C) | $T_{max}$. in the 3rd loss (°C) |
|---|---|---|---|
| Sample 12.1 Balloon Film | 87 | 296 | 814 |
| Reference Sample (Starch) | 127 | 322 | 812 |

The "Sample 12.1 Balloon Film" and the "Reference Sample" had similar results for corresponding to the maximum mass loss.

Differential Scanning Calorimetrv (DSC)

Both samples "Reference Sample" and "Sample 12.1 Balloon Film" exhibited an endothermic effect during the first heating, at 114°C and 127°C, respectively. These events are probably related to water evaporations from the samples. During the second heating no thermal events were observed under the conditions and temperature range applied.
"Sample 12.1 Balloon Film" showed noise at the baseline since 200°C, this being associated with the sample degradation, taking into consideration the polymer chain onset degradation temperature observed in the thermogravimetric analysis. For the "Reference Sample" this behavior is observed from 230°C on.

Melt Flow Index (MFI)

Sample 12 Melt Flow Index was 12.8 g/10min, which is comparable to an ordinary thermoplastic used in film extrusion.

Tensile Strength Assessment

The mechanical properties of polymer samples can be influenced by the conditions of preparation and testing of same, the crystallinity degree of the material, the molecular mass, the polymer chain alignment and especially the interaction degree between the sample components. Sample 12.1 physical properties were assessed with the aid of an Emic Universal Testing Machine. The sample was assayed as for the Elastic Modulus (MPa), Maximum Stress (MPa) and Elongation at break (%) parameters. The values represent the average of the results obtained relative to the number of test specimens of the assay in accordance with the D882 Standard. Figure 12.
Table 11 below represents the tensile physical properties results for Sample 12.1 and commercial samples, acquired from Finlandia, Bioska+, Pikka and Bioska Kassi.
Note. No stretching process (which improves physical properties) was carried out for obtaining the Sample 12.1 films. In view of this fact, tensile tests results should not be compared with those of stretched films, but were carried out for the sake of comparison.

**TABLE 11**

| Samples | Elongation at break% | Maximum stress (MPa) | Elastic Modulus (MPa) |
|---|---|---|---|
| Bioska+ -DM | 42.52 | 13.51 | 54.94 |
| Bioska+ -DT | 25.59 | 8.59 | 58.29 |
| Pikka -DM | 91.53 | 18.70 | 130.4 |
| Pikka -DT | 21.96 | 11.87 | 95.45 |
| Bioska Kassi-DM | 118.1 | 14.92 | 112.7 |
| Bioska Kassi- DT | 19.80 | 11.06 | 100.03 |

Data for the assessment of tensile strength for the sample of the film assessed in this step of the research for the two directions of the film orientation, in the Machine Direction (MD) and Cross-Machine Direction (CMD) can be observed in Table 11. The elongation at break of the Sample 12.1 film in the Machine Direction (DM) was 63.74%, while in the Cross-Machine Direction (CMD) it was 42.05%, this Sample did not exhibit a very important elongation.
The elastic modulus is a mechanical parameter providing information on the solid material stiffness and is influenced by the chemical composition, microstructure and defects of the material.

The elastic modulus for Sample 12.1 was 11.58 MPa and 13.02 MPa for the respective directions of film orientation, tested during the tensile assay; the comparison of this property with the tiny elongation at break of the material indicates an aspect of higher stiffness for this Sample. In this sense, the molecular mobility of Sample 12.1 could have been restricted when one takes into consideration that maybe the way of obtaining the film was not suitable as regards the equipment employed and parameters such as orientation, elongation and drawing in the machine for obtaining the film and this could have impaired the mechanical resistance of this film. Cracks formation in the flme can be related to the possible lack of uniformity in the film structure, which could have affected the sample mechanical properties.

Table 12 below lists the results for tensile physical properties for Sample 12.1 film.

**TABLE 12**

| Samples | Elongation at break% | Maximum stress (MPa) | Elastic Modulus (MPa) |
|---|---|---|---|
| Sample 12.1- MD | 63.74 | 2.36 | 11.58 |
| Sample 12.1 - CMD | 42.05 | 3.22 | 13.02 |

Test results point out that the behavior of the assessed sample, Sample 12.1. is similar to that of a thermoplastic polymer that can be processed and reprocessed in thermoplastic transformation equipment such as an extruder, for example.

Assessment of the degradation of the thermoplastic nanostructured bioresin 12, 12.1, 12.2, 12.3 and 12.4 biopellets

The biodegradation tests were performed in the lab scale, in accordance with the ASTM 5988-12 Method with a few adaptations. Glass flasks of approximately 2L internal volume were employed as bioreactors. The samples were evaluated for 180 days at 28°C, and the amount of carbon dioxide ($CO_2$) produced was quantified in an automatic respirometer (Micro-oxymax Respirometer System, Columbus Instruments). The inoculum for the test was a 50% mixture of cow dung manure compost and cane bagasse 1:2, and 50% earthworm castings. The humidity of the inoculums was adjusted to 60% in accordance with the standard.

The polymer samples of defined mass were ground in a mill and then slowly admixed to the inocula. Water-containing Falcon-type flasks were also added to the bioreactors to maintain the humidity of the medium. Starch was the positive reference in the biodegradation tests. The tests were performed in duplicate.

Mineralization

Biodegradation studies are based on the estimation of the carbon mineralization percentage, that is, the amount of carbon converted by the samples into $CO_2$. Its calculation is performed with the aid of Equation 1 below:

$$Mineralization = \frac{M_p CO_2}{M_t CO_2} * 100$$

where:

$Mp_{CO_2}$ : $CO_2$ mass produced (mg)
$M_t CO_2$ : $CO_2$ theoretical mass (mg)

The biodegradation test by respirometry was performed on the bioresin biopellets Samples 12, 12.1, 12.2, 12.3, 12.4 for 180 days, in accordance with the international standards. This is the period considered necessary for attaining the degradation threshold. The result demonstrated that the thermoplastic nanostructured bioresin Samples 12, 12.1, 12.2, and 12.4 are 100% biodegradable. Only Sample 12.3 did not degrade completely, and for this one the linear adjustment of the biopolymer sample was used for the prediction of the complete degradation of the biopolymer, for which the result for the complete biodegradation would be 447 days. Figures 13, 14 and 15 show the results for the biodegration of Sample 12.3. Figure 15 illustrates the linear adjustment of the biopolymer sample used for the prediction and degradation of the polymer. In the respirometer analysis the $CO_2$ volume produced is measured as a function of time. These results indicate an effective action of the microorganisms during degradation, since they provide high $CO_2$ production for the positive reference.

A further measurement is that of mineralization versus time, determined on the basis of the above Equation.

Mineralization measurements are crucial for validating the biodegradation tests according to the ASTM Methods, that is, the test is validated when the positive reference, in this case starch, reaches 70% degradation in 180 days. The conversion of the $CO_2$ volume is obtained on the basis of the Cleyperon (PV=nRT) Equation. See Figure 14. During the $CO_2$ measurements, the equipment also measures pressure and temperature in the interior of the flask; in this way it is possible to convert the $CO_2$ volume into mass.

Figure 15 shows the linear curve with the data for angular and liear coefficient used for prediction and degradation of the biopellets.

The biopellets are biodegradable. The results demonstrated that four samples biodegraded in 180 days. Only one sample, the 12.3 sample, did not degrade in 180 days and for this one the linear adjustment for prediction of the biopellets degradation was carried out, the calculations indicating 447 days.

Biodegradation assessment of the extruded biofilms

The biodegradability of the biofilms extruded from the biopellets was determined. The pellets were obtained according to procedures described previously, the biofilms samples being presented in Figure 7A and 7B.

The biodegradability assessment of the biopolymer sample and of a Reference Sample was performed with the aid of a test simulating an intense aerobic composting laboratory process under controlled conditions. The sample to be evaluated as for biodegradability should be previously identified and characterized by the qualification tests predicted in the Standards, including: information on the identification of the constituents of the packaging materials (FTIR); determination of the presence of toxic substances (metals determination by ICP-OES); Fluorides digestion and determination by Colorimetry; determination of organic carbon (TOC); determination of total dry solids and volatile solids. In case these results are within the limits set forth by the Standard, the biodegradability test proceeds. The initial parameters, pH and humidity content of the organic compost should be measured before starting the biodegradability test for plastic materials, and are listed in Table 13 below.

**TABLE 13**

| Parameters | Organic Compost |
|---|---|
| pH (> 5.0) | 8.94 |
| Humidity content (%) | 89.5 |

Determination Of Total Dry Solids And Volatile Solids

The total dry solids determination is a test performed on the basis of the DIN EN 13432:2000 standard. The percentage of the total dry solids is obtained from the sample mass loss when submitted to drying at a temperature of $105 \pm 2$ °C constant weight.

Assessment of volatile solids is an assay based on the DIN EN 13432:2000 standard, where the volatile solids percentual is assessed on the difference between the total dry solids content and the ash content obtained after burning in a furnace at $550 \pm 50$ °C for1 hour.

Data for the total dry solids content and volatile solids for the organic compost are listed in Table 14.

**TABLE 14**

| Parameter | Results |
|---|---|
| Total Dry Solids Content (%) | 86.78 |
| Volatile Solids Content (%) | 21.52 |

Assessment of the Total Metals Content by digestion of the organic compost

The test for metals assessment was performed on the basis of the USEPA Method 3052 (Rev. 0; 1996) and USEPA Method 3050B (Rev. 2; 1996) for the sample preparation and USEPA Method 6010C (Rev. 3; 2007) and PRI 638/320 standards for the sample analysis. The principle of the analysis consists in the acid digestion of the sample (migration) and further analysis by Inductively Coupled Plasma Atomic Emission Spectroscopy (ICP-OES).

The metals present in the organic compost, based on the total dry solids content and volatile solids were identified by ICP-OES and are listed in Table 15 below.

**TABLE 15**

| Metal | Result (mg/kg) |
|---|---|
| Aluminum | 2839.42 |
| Antimonium | < LQ |
| Arsenic | < LQ |
| Barium | 91.61 |
| Beryllium | < QL |
| Bismuth | < QL |
| Boron | < QL |
| Cadmium | < QL |
| Calcium | 13336.15 |
| Lead | 6.96 |
| Cobalt | < QL |
| Copper | 21.84 |
| Chrome | 5.72 |
| Tin | < QL |
| Strontium | 51.53 |
| Iron | 978.08 |
| Phosphorus | 1452.88 |
| Germanium | < QL |
| Lithium | < QL |
| Magnesium | 2639.75 |
| Manganese | 190.82 |
| Mercury | < QL |
| Molybdenum | 1.01 |
| Nickel | < QL |
| Potassium | 3931.49 |
| Silver | 19.83 |
| Selenium | < QL |
| Silicon | 129.57 |
| Sodium | 73.63 |
| Thallium | < QL |
| Titanium | 789.55 |
| Vanadium | 13.41 |
| Zinc | 77.50 |
| Zirconium | 17.54 |

where: mg/kg = 0.0001% (mass percentage of the metal in the Sample); <QL = below the Quantification Limit of the method.

Assessment of the Biodregadability of Plastic materials

The assessment of the biodegradability of plastic materials is carried out with the aid of a test simulating an intense aerobic composting process in the laboratory under contolled conditions. The biodegradability percentage was determined through the conversion of the organic carbon of the sample into carbon dioxide ($CO_2$) released during the test period, in accordance with the DIN EN 13432:2000, ISO 14855-1:2012 and ABNT NBR 15448-2:2008 standards.

Data related to the masses of sample, the organic compost and the TLC grade cellulose (reference material) and the description of same in each incubation reactor are listed in Table 16 below. The test was carried out in duplicate for the samples and in triplicate for each assessed condition (organic compost and cellulose). In Table 16 below are listed the initial parameters for the biodegradability assay for the reference sample (starch) and for Sample 12.1.

**TABLE 16**

| Parameter | Incubation Reactor | | | | | | | | | |
|---|---|---|---|---|---|---|---|---|---|---|
| | 1 | 2 | 3 | 4 | 5 | 6 | 7 | 8 | 9 | 10 |
| Mass of Reference Sample starch (q) | 50.04 | 50.01 | - | - | - | - | - | - | - | - |
| Mass of Sample 12 (g) | - | - | 50.03 | 50.02 | - | - | - | - | - | - |
| Mass of cellulose[1] (q) | - | - | - | - | 50.01 | 50.00 | 50.03 | - | - | - |
| Mass of organic compost (q) | 300.2 | 301.00 | 300.3 | 300.4 | 301.00 | 300.2 | 300.1 | 300.05 | 300.1 | 300.4 |
| **Note**: Incubation Reactors 1, 2, 3 and 4 = Samples; Incubation Reactors 5, 6 and 7 = Reference Material; [1]Reference = TLC grade cellulose | | | | | | | | | | |

The assessment of the biodegradability of plastic materials carried out with the aid of a test simulating an intense aerobic composting process in the laboratory under contolled conditions. The biodegradability percentage was determined through the conversion of the sample organic carbon into carbon dioxide ($CO_2$) released during the test period, in accordance with the DIN EN 13432:2000, ISO 14855-1:2012 and ABNT NBR 15448-2:2008 standards.

**Claims**

1. Composition for a biodegradable, thermoplastic, nanostructured bioresin, said composition being **characterizing by** comprising:

   a)A renewable source polymer matrix, consisting of i) between 10% and 80% by weight, preferably between 20% and 75% by weight, and more preferably between 30% and 70% by weight, based on the total weight of the composition, of a renewable source polymer comprising an exopolysaccharide produced by *Xanthomonas arboricola* pathovar *pruni* (xanthan pruni), and of ii) between 10% and 80% by weight, preferably between 20% and 75% by weight, and more preferably, between 25% and 65% by weight, based on the total weight of the composition, of modified starch;
   b) Between 10% and 70% by weight, preferably between 15% and 65% by weight, and more preferably, between 20% and 60% by weight, based on the total weight of the composition, of a plasticizer agent; and
   c), nanofillers, selected among organophilic clay Cloisite 30B, crystalline nanocellulose NCC, the weight ratio of nanofillers based on the said polymer matrix being from 0.0020 to 0.10, preferably between 0.0020 to 0.080 and more preferably between 0.0020 to 0.070 for inorganic or organic nanofillers and functionalized nanoparticles (NPF) ZnONanometallisRSol and $SiO_2$ NanometallisRsolGel, the weight ratio based on the biopolymer matrix being from 0.0001 to 0.0005 so that by extruding the composition under extrusion conditions the MFI (Melt Flow Index) for obtaining flexible articles is between 0.1g/10 min to 20 g/10 min for a 21.6 kg load and for obtaining semi-rigid or rigid articles the MFI is of at least 70 g/10 min for a load of 21.6kg.

**2.** Composition according to claim 1, **characterized in that** said polymer matrix comprises further an exopolysaccharide comprising commercial xanthans produced by *Xanthomonas campestris* pv. Campestris, in the proportion of 2% to 50% by weight, preferably between 5% and 35% by weight and more preferably between 5% and 30% by weight, based on the total weight of the composition.

**3.** Composition according to claim 1, **characterized in that** it is free from added water.

**4.** Composition according to claim 1, **characterized in that** the molar mass of the xanthan pruni, neat or in admixture with commercial xanthans is between $5 \times 10^5$ to $1.3 \times 10^7$ g.mol$^{-1}$.

**5.** Composition according to claim 1, **characterized in that** the plasticizer agent comprises i) lipophilic agents, selected among edible oils and liquid lipids, vegetable oils of rice, soy, sunflower, canola, peanuts and corn, coconut, nuts, almonds and edible nuts, copaiba, carnauba oil, linseed, grape seed oil; and ii) hydrophilic agents selected among propylene glycol and polyethylene glycol, glycerol and sorbitol, neat or combined.

**6.** Composition according to claim 5, **characterized in that** the plasticizer agent comprises glycerol.

**7.** Composition according to claim 1, **characterized in that** it further comprises:

a) From 0.0% to 10% by weight of the composition for bioresin, of solid dispersants or as antiagglomerating agents selected among mono-, di- or tribasic phosphates, titanium dioxide, calcium or magnesium carbonate and silicon dioxide, based on the weight of the biopolymer matrix.
b) from 0.1% by weight to 15% by weight of SEBS compatibilizers selected among EL05, FS115, FS105, FS110, neat or combined in any proportion, based on the weight of the biopolymer matrix;
c) from 0.0% by weight to 10% by weight of thermal stabilizers selected among Calcium Chloride, $CaCl_2$ and Zinc Chloride, $ZnCl_2$, neat or combined in any proportion based on the weight of the biopolymer matrix;
d) from 0.0% by weight to 5% by weight of dimensional stabilizers selected among those of calcium base and of zinc base, neat or combined in any proportion, based on the weight of the biopolymer matrix;
e) from 0.0% by weight to 10% by weight of antioxidants, selected among sulfites (thioesters and thiodiopropionic acid esters) and phosphites (phosphoric acid trimesters), ascorbic acid, erythorbic acid and their salts neat or combined in any proportion, or still the dual action ones, antioxidants and conservatives selected among: primary and chelating, synergists such as butylhydroxytoluene (BHT) and butylhydroxyanisol (BHA) based on the weight of the biopolymer matrix;
f) from 0.0% to 5% by weight of conservatives, selected among methyl and ethyl paraben, sorbic acid and sodium or potassium sorbate, neat or combined in any proportion, based on the weight of the biopolymer matrix;
g) from 0.0% to 5% by weight, based on the weight of the biopolymer matrix, of emulsifiers selected among hydrophilic-lipophilic balance (HLB) between 0.0 and 5.0, preferably between 0.2 an 3.0 and more preferably between 0.5 and 1.5, selected among sorbitan trioleate and sorbitan tristearate , neat or combined in any proportion;
h) from 0.0% to 5% by weight, based on the weight of the biopolymer matrix, of emulgents, selected among polyoxyethylene esters and lecithin;
i) from 0.0% to 5% by weight, based on the total weight of the composition, of antioxidants, selected among primary and chelating, synergists such as butylhydroxytoluene (BHT) and butylhydroxyanisole (BHA) and ascorbic acid and erythorbic acid and their salts, respectively, neat or combined;
j) from 0.0% to 10% by weight, based on the total weight of the composition, of mono- or divalent salts, selected among sodium chloride, NaCl, potassium chloride KCl, $MnO_2$, $Mn_2O$, neat or combined in any proportion;
k) from 0.0% to 10% by weight, based on the weight of the biopolymer matrix, of a $C_1$-$C_3$ alcohol selected among ethyl alcohol; and
l) from 0.0% to 10% by weight, based on the weight of the biopolymer matrix, of an anti-humectant selected silicon dioxide silicon dioxide $SiO_2$, calcium carbonate $CaCO_3$, talco $(Mg_3(Si_2O_5)_2(OH)_2$ or $(3MgO. 4SiO_2. H2O)$, magnesium carbonate $MgCO_3$, calcium silicate $CaSiO_3$, aluminum salts: aluminum silicate, sodium aluminum silicate: $NaAl_2Si_3O_8$, tricalcium phosphate, magnesium oxide, potassium oxide, sodium oxide, ammonium salts of the myristic, palmitic and stearic acids; microcrystalline cellulose.

**8.** Biodegradable, thermoplastic nanostructured bioresin obtained from the composition according to claim 1, said bioresin being **characterized by** comprising extrusion processing under extrusion conditions, including a temperature lower than 140°C, the components of said composition.

9. Bioresin according to claim 8, **characterized in that** the extrusion is performed in one single step.

10. Bioresin according to claim 8, **characterized in that** the extrusion is performed without pre-preparation.

11. Bioresin according to claim 8, **characterized in that** it is obtained in the form of a spaghetti/biopellet.

12. Bioresin according to claim 11, **characterized in that** the spaghetti /biopellet is ground to obtain a powder.

13. Article obtained from the bioresin according to claim 8, **characterized in that** said article is extruded under extrusion conditions in a blow extruder to form flexible packaging films.

14. Article obtained from the bioresin according to claim 8, **characterized in that** said article is injected under injection conditions to obtain rigid or semi-rigid articles.

## INTERNATIONAL SEARCH REPORT

| | International application No. |
|---|---|
| | **PCT/BR2021/050075** |

**A. CLASSIFICATION OF SUBJECT MATTER**

**IPC: C08L 3/02 (2006.01), C08L 5/00 (2006.01), C07H 3/00 (2006.01), C07K 14/195 (2006.01), C08B 37/00 (2006.01)**
**CPC: C08L 3/02, C08L 5/00, C07H 3/00, C07K 14/195, C08B 37/00 (2006.01)**
According to International Patent Classification (IPC) or to both national classification and IPC

**B. FIELDS SEARCHED**

Minimum documentation searched (classification system followed by classification symbols)

**IPC: C08L 3/02, C08L 5/00, C07H 3/00, C07K 14/195, C08B 37/00 (2006.01)**

Documentation searched other than minimum documentation to the extent that such documents are included in the fields searched
**Banco de Patentes Brasileiro INPI-Br**

Electronic data base consulted during the international search (name of data base and, where practicable, search terms used)

**Derwent Innovation**

**C. DOCUMENTS CONSIDERED TO BE RELEVANT**

| Category* | Citation of document, with indication, where appropriate, of the relevant passages | Relevant to claim No. |
|---|---|---|
| X | BR112014029845 A2 ( UFPEL UNIVERSIDADE FED DE PELOTAS [BR]) 15 MAY 2018 (15.05.2018) Claims; examples; paragraphs [0072], [0075], [0076], [0079], [0083] ----------------------------------------- | 1-14 |

☐ Further documents are listed in the continuation of Box C.    ☒ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 07 APR 2021 (07.04.2021) | 14 APR 2021 (14.04.2021) |

| Name and mailing address of the ISA/ | Authorized officer |
|---|---|
| ISA/BR | |
| Facsimile No. | Telephone No. |

Form PCT/ISA/210 (second sheet) (January 2015)

INTERNATIONAL SEARCH REPORT
Information on patent family members

| International application No. |
| --- |
| PCT/BR2021/050075 |

| BR 112014029845 A2 | 2018-05-15 | WO 2013181731 A1 | 2013-12-1220 |
| --------------------------------- | ---------------- | --------------------------------- | ---------------- |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2011080623 A1
- EP 2794214 A
- US 2013154151 A1
- US 6406530 B
- CN 109486140
- CN 108948691
- CN 107417984
- CA 2342174 C
- CN 10948614
- CN 109401248
- BR 102014028009 A1
- US 6811599 A
- BR PI04063090
- BR 122014030015

### Non-patent literature cited in the description

- **ESTEVES, A.C.C.** Nanocompósitos de matriz polimérica: estratégias de síntese de materiais hibridos. *Quím. Nova,* September 2004, vol. 27 (5), 799
- **CHANDRA, R. ; RUSTGI, R.** Biodegradable Polymers. *Progress in Polymer Science,* 1998, vol. 23, 1273-1335
- Xanthomonas. Chapman & Hall, 1993, 363-388